# EUROPEAN PATENT APPLICATION

(11) **EP 2 865 888 A1**
(43) Date of publication of application: **29.04.2015**
(21) Application number: 13189862.9
(22) Date of filing: 23.10.2013
(51) Int. Cl.: F03D 7/02, F16D 69/00

(54) **Wind turbine provided with yaw brakes having a brake lining with grooves**

(71) Applicant: S.B. Patent Holdings ApS, 5882 Vejstrup (DK)
(72) Inventor: Havsteen, Bjarne V., 5250 Odense SV (DK); Woods, James A. W., 5874 Hesselager (DK)
(74) Representative: COPA Copenhagen Patents

(57) **Abstract**

A wind turbine (2) provided with a yaw brake system (20) is described. The yaw brake system (20) comprising a brake calliper (24) and a brake disc (22), the yaw brake system (20), when activated, acting as a rotation restriction of a nacelle (6) in relation to a tower (4) of the wind turbine (2). The brake calliper (24) is provided with a brake pad having a brake lining and an actuator for moving the brake pad against the brake disc (22), wherein the brake lining (38) comprises a first surface (39) facing towards the brake disc (22). A groove (40) having a groove width (w) is formed in the first surface (39) of the brake lining (38), the groove (40) comprising a first end (141) and a second end (143), where at least the first end (141) and preferably also the second end (143) contacts a periphery of the brake lining (38). The groove width (w) is widening towards the first surface (39) of the brake lining (38).

## Description

The current invention relates to a wind turbine provided with a yaw brake.

A wind turbine comprises a nacelle or machine housing carrying the electricity producing parts, blades as well as a yaw system which controls orientation of the wind turbine rotor relative to the prevailing wind direction. If the wind turbine is not oriented correctly, the wind imposes uneven loads on the rotor and seriously reduces the efficiency of the wind turbine. Therefore, the function of the yaw system is important in order to improve the efficiency and prolong the lifetime of the wind turbine.

The yaw system often comprises a toothed brake disc or ring fixed to the tower and a motor activated gear attached to the nacelle and meshing with the toothed gear so that activation of the motor results in a revolving of the nacelle thereby producing the yaw motion of the nacelle. The yaw drive or gear may also be separated from the brake disc.

The yaw system may be provided with ball bearings or sliding bearings for the yaw motion. In wind turbines fitted with a ball bearing for the yaw motion, the nacelle can rest on the ball bearing, which allows the nacelle to revolve around the vertical axis of the tower. The ball bearing may also hold the nacelle on to the tower top in case of strong winds, where the wind forces on the nacelle tend to blow the nacelle off the tower. Variations in the wind speed may also cause the nacelle to yaw. In particular large wind turbines often use sliding bearings. However, the wind forces on the nacelle will still try to blow the nacelle off the tower and as a wind turbines without a ball bearing no longer have the down hold force that the ball bearing provides, the down hold force has to come from somewhere else. Therefore, the yaw brake not only functions as a means to maintain the nacelle and rotor in the correct yaw position but also provides the necessary down hold force.

The wind turbine is typically provided with several yaw brakes. When the wind turbine is not yawing, the brakes act on the yaw disc. The brakes are also normally activated or partly engaged during yawing in order to dampen the yaw movement and reduce vibrations to the nacelle and rotor. Accordingly, the yaw brakes are typically engaged for extended periods of time in order to ensure that the nacelle is maintained in the correct position. The yaw brake typically comprises a brake calliper or yokes, which in turn comprises at least one brake piston and a brake pad provided in a calliper part or yoke of the brake. The brake disc is arranged in a receiving part of the brake calliper, and when the brake piston is engaged, the brake pad is compressed against the brake disc, thus providing a braking force due to a frictional engagement between the brake pad and the brake disc. Typically, the calliper parts or brakes are provided with two or three brake pistons that may press the brake pads against each side of the brake disc, and which supply the clamping force for the yaw brake.

The yaw brake is during use exposed to various impurities, such as brake dust from the brake pads due to wear and airborne dust. Since the yaw brakes are engaged for long periods of time and with a high braking force of several tons, the yaw brakes tend to compact the dust on the surface of the brake pads and disc, thereby in particular forming a sort of glazing on the surface of the brake pads. This problem is further enhanced by the fact that the brake disc is arranged in a horizontal position, whereby the dust settles on the disc and brake pads. As a result, the surface desired for efficient and quiet operation of the brake pads and the friction coefficient may be affected, which in turn may lead to brake noise and vibrations as well as poor durability for the brake pads. This may lead to a shortened lifetime of the brake pads and consequently result in the yaw brake system requiring service more often.

It is an object of the invention to obtain a wind turbine, which overcomes or ameliorates at least one of the disadvantages of the prior art or which provides a useful alternative.

According to the invention, this is obtained by a wind turbine comprising a number of wind turbine blades extending substantially radially from a hub on a main shaft having a substantially horizontal axis, the wind turbine blades together with the hub forming a rotor, which can be put into rotation by wind. The main shaft is rotatably mounted in a nacelle that is mounted on top of a tower, and the nacelle may be rotated around a vertical axis in relation to the tower so as to adjust the rotor in relation to a prevailing wind direction. The wind turbine further comprises a yaw brake system comprising a brake calliper and a brake disc or ring, the yaw brake, when activated, acting as a rotation restriction of the nacelle in relation to the tower. The brake calliper is provided with a brake pad having a brake lining and an actuator for moving the brake pad against the brake disc, wherein the brake lining comprises a first surface facing towards the brake. A groove having a groove width is formed in the first surface of the brake lining, and the groove comprises a first end and a second end, where at least the first end and preferably also the second end contacts a periphery of the brake lining, and wherein the groove width is increasing towards the first surface of the brake lining.

Even though yaw brakes are constantly engaged during use of the wind turbine and the movement between the brake pads and brake disc during yawing is relatively slow, it has surprisingly been found that such a groove configuration is particularly suited for removing the dust and wear particles from the brake disc or friction material of the brake lining without the grooves clogging up. Further, since at least one of the ends of the grooves contacts the periphery of the first surface of the brake lining, the at least one end will function as an outlet for removing wear particles, dust and other debris from the brake system, thus preventing the build-up of glazing on the brake pads.

The groove advantageously has a first sidewall and a second sidewall. In this case, the groove width of the groove is defined as the distance between the first sidewall and second sidewall. The width at the top of the groove is denoted as the surface width.

Since the groove is widening towards the first surface of the brake lining, this means that the first sidewall and the second sidewall are diverging towards the first surface of the brake lining or at least along a part of the sidewall. In some configurations, the groove may also comprise a bottom surface.

The brake pad advantageously comprises a backing plate and the brake lining, which is glued to the backing plate.

The actuator is preferably a brake piston. The brake piston may advantageously be hy-draulically activated. However, the brake piston may also be pneumatically or electrically activated.

The brake lining comprises a periphery which advantageously is delimited by a first end face and a second end face as well as a first side face and a second side face. The first side face and the second side face are typically oriented substantially parallel to the tangent of the periphery of the brake disc.

The first surface is the friction surface of the brake lining.

In practice a yaw brake typically comprises a plurality of brake callipers disposed around the brake disc or ring. Throughout the description, the terms brake disc or brake ring are used interchangeably.

Preferably, the first end of the groove ends at a first side face of the brake lining, and/or the second end of the groove ends at a second side face of the brake lining.

The brake disc is preferably arranged in a substantially horizontal position. Additionally, the brake disc is preferably stationary mounted, e.g. in the tower.

The yaw brake is applicable to both yaw systems using ball bearings and yaw systems using sliding bearings.

According to an advantageous embodiment, the groove comprises a substantially v-shaped cross section. This configuration has shown to be particularly useful for removing the dust without the grooves clogging up. The grooves may also have a substantially u-shaped cross section.

According to another advantageous embodiment, the grooves have a surface width of between 7 and 25 mm, advantageously between 10 and 20 mm, more advantageously around 14 mm. The grooves may advantageously have a depth of between 3 and 15 mm, advantageously between 5 and 12 mm, more advantageously around 7 mm. Such dimensions have shown to provide good collection of wear particles and the ability to move the particles to the periphery of the brake lining without the groove clogging up.

For v-shaped grooves the first sidewall and/or the second sidewall may thus be angled between 5 and 50 degrees, or between 15 and 50 degrees, or between 25 and 50 degrees to a normal to the first surface. Accordingly, the first sidewall and the second side wall may be mutually angled with an angle corresponding to twice the afore-mentioned ranges.

The sidewalls may be straight or slightly curved. If the sidewalls are curved, the afore-mentioned angle is measured by comparing a median line to the sidewall to the normal to the first surface of the brake lining.

In one advantageous embodiment, the groove at the first end and/or the second end is oriented at an angle with a tangent to the periphery of the brake lining (or correspondingly a tangent to the brake disc), preferably one of the side faces, of the brake lining, said angle being between 45 and 85 degrees, advantageously between 60 and 80 degrees, and more advantageously between 65 and 75 degrees. Equivalently, the ends may be oriented so that they form an angle of between 5 and 45 degrees to the normal to the periphery, preferably one of the side faces, of the brake lining, or between 10 and 30 degrees, or even between 15 and 25 degrees.

The groove may be straight, which means that the entire groove is oriented in that angle compared to the tangent of brake lining periphery (or correspondingly a tangent to the brake disc). However, the groove may also be curved along the length of the groove so that it is only the ends that are oriented in said angle range.

In another advantageous embodiment, the groove width is increasing from a middle part of the groove and towards the first end and/or the second end. In other words, the first and the second sidewall are diverging from a middle part of the groove towards the first end and/or the second end of the groove. The groove may have a constant depth along the groove, in which case the angle of the sidewall changes along the length. The grooves may also have a varying depth, e.g. increasing towards the first end and/or the second end, in which case the angle of the sidewall may be constant. Over-all, it is seen that the groove may take up various configurations, where a cross-sectional area of the groove increases towards the periphery of the brake lining. This may provide an increasingly easier passage to assist dust migration to the periphery of the brake lining. The surface width of the grooves at the middle part of the groove may be between 8 and 16 mm, e.g. between 10 and 14 mm, and the surface width at the first end and the second end may be between 12 and 20 mm, e.g. between 14 and 18 mm. The first sidewall and the second sidewall may for instance have a mutual diversion angle of 5-25 degrees or 5-15 degrees.

According to a particularly advantageous embodiment, the first end and/or the second end of the groove are chamfered. Thus, the outlet opening of the groove is increased compared to the remainder of the groove, which assists in removing the wear particles even further.

According to another advantageous embodiment, the groove is substantially s-shaped or z-shaped. In other words, the groove comprises a middle part, where the groove is oriented at a low angle compared to the normal of the first side and the second side of the brake pad (or equivalently nearly orthogonal to the braking direction), whereas the angle increases towards the first end and the second end of the groove. This configuration has the advantage that a major part is oriented substantially orthogonal to the braking direction so that it more easily collects the wear particles, whereas the larger angles at the ends of the grooves facilitate an improved removal of the particles.

In one embodiment, the brake lining comprises one or two grooves only. In another embodiment, the brake lining comprises a plurality of grooves which are arranged with a mutual spacing of 10-15 cm.

The brake lining for one type of yaw brakes typically has a length (between the first end face and the second end face) of 20-70 cm, e.g. around 42 cm. The brake lining typically has a width (between the first side face and the second side face) of 100-200 mm, e.g. around 138 mm. Such a type brake lining normally has two grooves formed in the surface. The brake lining for a second type of yaw brakes typically has a length of 15-25 cm, e.g. around 218 mm, and a width of 8-13 cm, e.g. around 108 mm. Such a brake lining normally has only one groove formed in the surface.

Preferably, the wind turbine further comprises a yaw system for actively rotating the nacelle relative to the tower. This may for instance be carried out by use of a yaw drive. The yaw drive may for instance comprise a gear that engages a toothed yaw disc brake.

The brake disc or ring may be mounted on the tower, and the brake calliper may be mounted on a lower part of the nacelle. The brake disc may for instance comprise a peripheral part formed along the peripheral portion of an upper circumferential surface in the tower. In principle, the brake disc could also be provided in a lower part of the nacelle and the brake calliper be provided in a top part of the tower.

In one embodiment, the brake calliper takes up an inner part of the brake disc, i.e. the brake calliper is arranged inside the brake disc ring. The brake calliper may also be provided on the outer periphery of the brake disc.

The disc brakes may have various sizes, e.g. around 2 metres in diameter. However, in general the width, shape and orientation of the grooves are not changed, since the anti-glazing effect relates to the grooves and not the size of the brake disc.

The invention also provides a yaw brake for a wind turbine having a brake disc, wherein the yaw brake comprises a brake calliper, wherein the brake calliper is provided with a brake pad having a brake lining and an actuator for moving the brake pad against the brake disc, and wherein the brake lining comprises a first surface facing towards the brake disc as well as a first side and a second side. A groove having a groove width is formed in the first surface of the brake lining, the groove comprising a first end, which ends at a first periphery of the brake lining, and a second end, which ends at a second periphery of the brake lining. The groove width is advantageously widening towards the first surface of the brake lining. Any of the afore-mentioned groove shapes may be utilised for the yaw brake. These embodiments may also apply to a yaw brake provided with grooves having a substantially square cross-section, in particular the embodiments, where the sidewalls are angled compared to the normal of the side face of the brake lining, since these embodiments further assist in removing the wear particles. Thus, the embodiments having grooves with ends oriented in an angle compared to the normal, grooves widening towards the periphery of the brake lining, as well as the s-shaped or z-shaped grooves may also be used with substantially square grooves.

The invention is explained in detail below with reference to embodiments shown in the drawings, in which
Fig. 1 shows a wind turbine,
Fig. 2 shows a wind turbine provided with a yaw brake according to the invention,
Fig. 3 shows a yaw brake comprising a brake disc and a number of brake callipers,
Fig. 4 shows a side view of a brake calliper,
Fig. 5 shows a top view of a brake calliper part,
Fig. 6 shows a first embodiment of a brake lining according to the invention,
Fig. 7 shows a second embodiment of a brake lining according to the invention,
Fig. 8 shows a third embodiment of a brake lining according to the invention,
Fig. 9 shows a fourth embodiment of a brake lining according to the invention,
Fig. 10 shows a cross-section of a first embodiment of a brake lining groove, and
Fig. 11 shows a cross-section of a second embodiment of a brake lining groove.

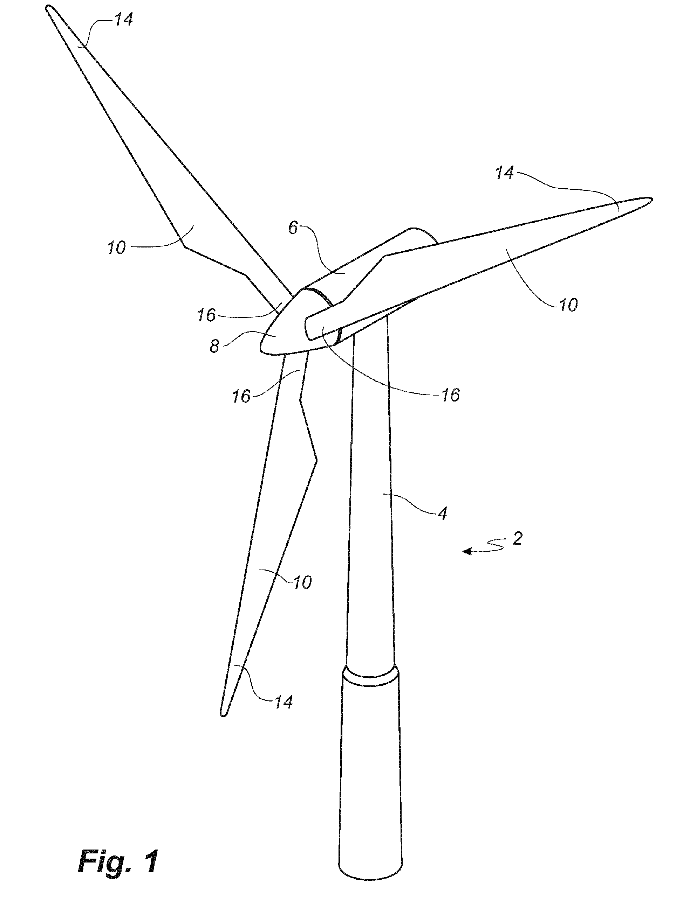

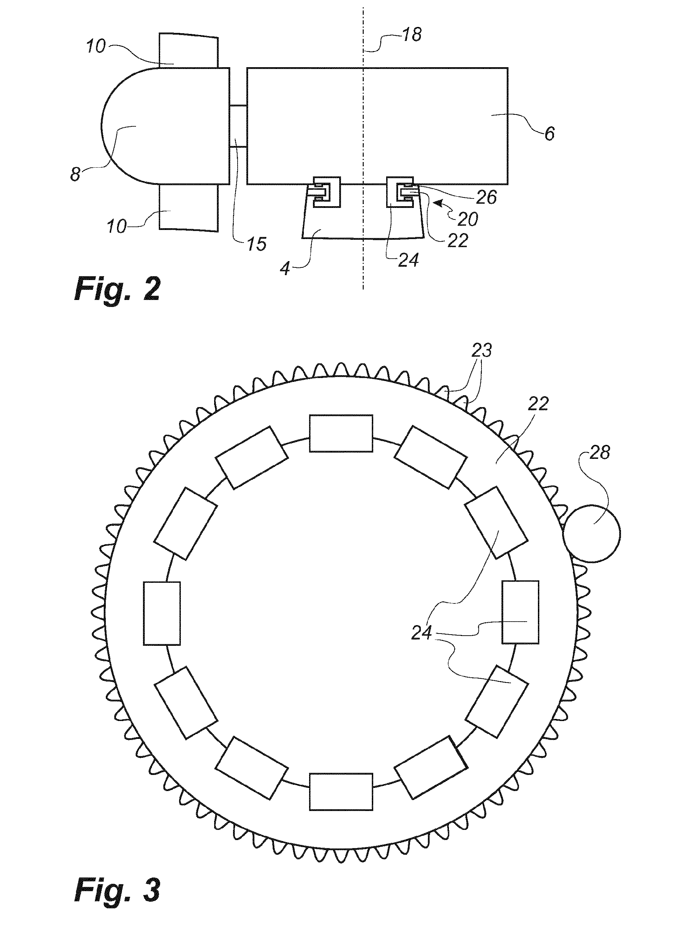

Figs. 1 and 2 illustrate a conventional modern upwind wind turbine 2 according to the so-called "Danish concept" with a tower 4, a nacelle 6 and a rotor with a substantially horizontal rotor shaft 15. The rotor includes a hub 8 and three blades 10 extending radially from the hub 8, each having a blade root 16 nearest the hub and a blade tip 14 farthest from the hub 8. The rotor has a radius denoted R.

The wind turbine 2 comprises a yaw system, which controls the orientation of the wind turbine rotor relative to the prevailing wind direction. The yaw system allows the nacelle 6 or machine housing to be rotated around a vertical axis 18 relative to the tower 4. The yaw system may for instance comprise a yaw drive (not shown), e.g. in form of a gear, that may engage a toothed yaw bearing. The toothing may be provided on the inner ring or outer ring of the yaw bearing. The yaw drive is typically attached to the nacelle 6, whereas the yaw bearing is made stationary with respect to the tower 4. After the yaw adjustment of the nacelle 6, the nacelle is immobilised by use of a yaw brake system 20 that comprises a brake disc 22 and a number of brake units that are arranged around the brake disc 22. The brake disc 22 may be integrated with the yaw bearing, or it may be a separate unit of the yaw and brake system. The brake unit preferably comprise a brake calliper 24 having jaw parts that straddle the brake disc 22. The brake units are preferably hydraulically actuated, e.g. via a piston that applies brake force to brake pads 26 that engage with the brake disc 22 and in turn apply a braking torque due to the friction of the brake pads 26. However, other activation means may be applicable, such as electromagnetic or pneumatic activations means. Pistons and brake pads are preferably provided both on the upper jaw and the lower jaw of the calliper 24. Alternatively, only the upper jaw is provided with a brake pad, whereas the lower jaw may be provided with sliding pads.

The yaw system often comprises a toothed brake disc or ring fixed to the tower and a motor activated gear attached to the nacelle and meshing with the toothed gear so that activation of the motor results in a revolving of the nacelle thereby producing the yaw motion of the nacelle. The yaw drive or gear may also as previously mentioned be separated from the brake disc.

Fig. 3 shows an embodiment, where the toothed yaw bearing and the brake disc 22 are integrally formed. The disc 22 comprises teeth 23 provided on an outer periphery of the disc 22. A number of brake callipers 24 are arranged annually around the disc ring along the inner periphery. As previously mentioned, the teeth may alternatively be provided on the inner periphery of the ring, and the brake callipers may be arranged along the outer periphery of the ring. A yaw drive or gear 28 is provided to engage with the teeth 23 so as to yaw the nacelle 6 around the vertical axis 18 of the tower 4.

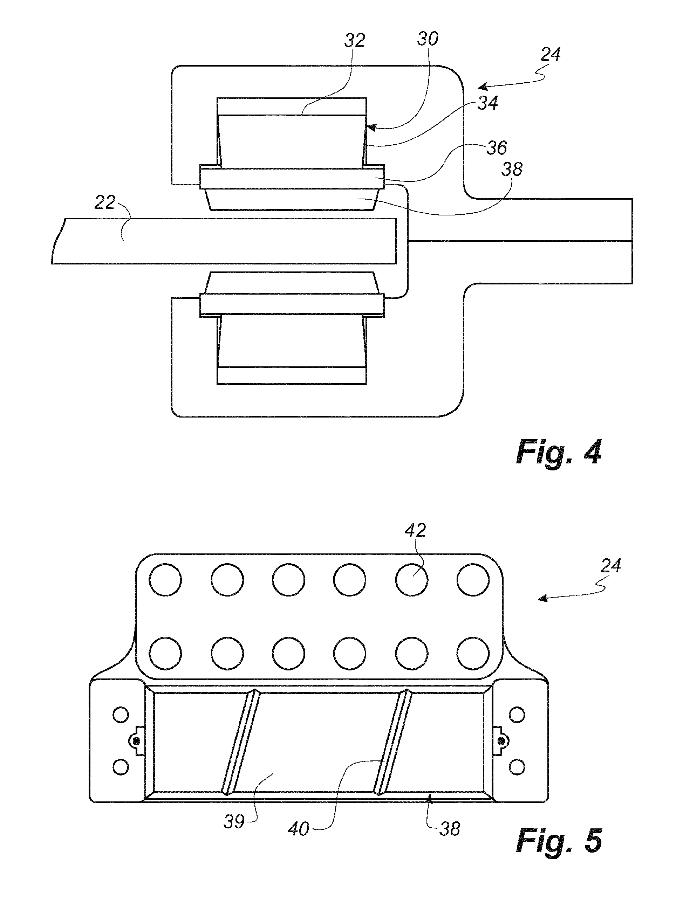

Fig. 4 shows a side view of a brake calliper 24. The brake calliper 24 comprises two brake calliper parts, and one of the brake calliper parts are shown in a top view in Fig. 5. The brake calliper parts each comprise a piston bore 30, in which a movable piston 34 is arranged. The piston 34 engages a brake pad comprising a backing plate 36 and a brake lining 38 made of a friction material. The piston may be hydraulically activated for instance by injecting a fluid into a chamber 32 behind the piston, which in turn forces the brake pad and thus the brake lining 38 against the brake disc 22, thereby applying a brake force. However, other types of actuators, such as pneumatic or electrical actuators may also be used for pressing the brake lining 38 against the brake disc 22. The brake calliper 24 is shown with brake pistons on each side of the brake disc 22. However, it may also be sufficient to only use a brake piston on one side of the brake disc 22. In such an embodiment, the second brake calliper part may be provided with a pad made of a sliding material or friction material, which may contact one side of the brake disc 22.

The two calliper parts are connected to each other via bolts through bores 42 in a stationary part of the calliper part. The stationary parts are further anchored to the wind turbine. As seen in Fig. 5, the brake lining 38 comprises two grooves formed in the surface of the brake lining. The brake is in Fig. 4 shown with the piston 32 and the brake pad in a disengaged position. However, the yaw brakes are during use of the wind turbine engaged either fully to prevent yawing and at least partially, when the nacelle is yawing. The brake force is only released during service of the yaw brakes.

The yaw brake is during use exposed to various impurities, such as brake dust from the brake pads due to wear and airborne dust and oxidised disc residues. Since the yaw brakes are engaged for long periods of time and with a high braking force of several tons, the yaw brakes tend to compact the dust on the surface of the brake pads and disc, thereby in particular forming a sort of glazing on the surface of the brake pads. This problem is further enhanced by the fact that the brake disc is arranged in a horizontal position, whereby the dust settles on the disc and brake pads. As a result, the surface desired for efficient and quiet operation of the brake pads and the friction coefficient can be affected, which in turn may lead to brake noise and vibrations as well as poor durability for the brake pads. The grooves 40 alleviate the build-up of the glazing by collecting the dust and residues and transporting the dust away.

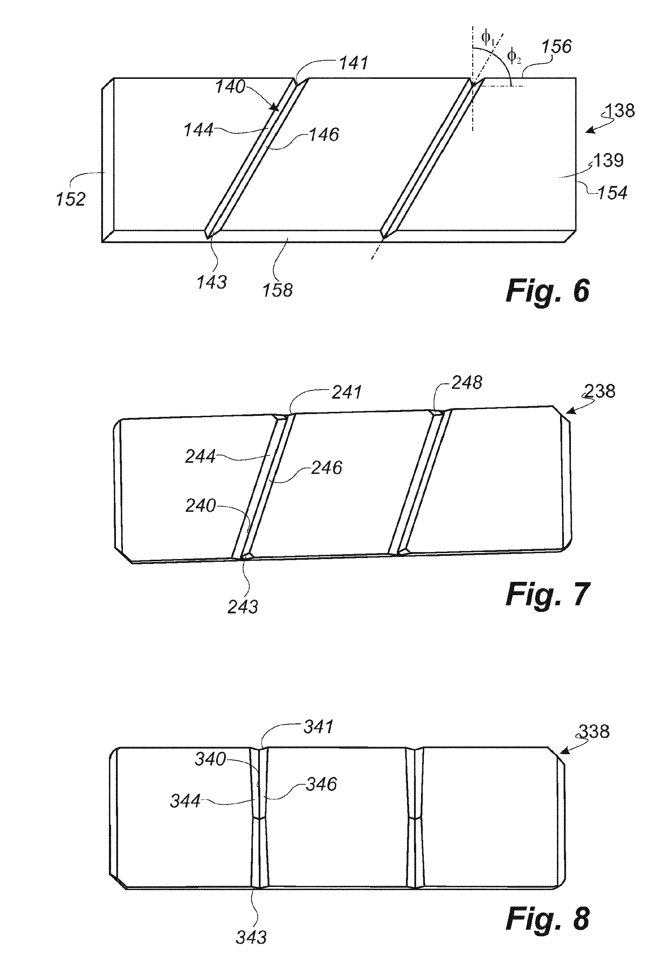

Fig. 6 shows a first embodiment of a brake lining 138 according to the invention. The brake lining 138 comprises a periphery which is delimited by a first end face 152 and a second end face 154 as well as a first side face 156 and a second side face 158. The first side face 156 and the second side face 158 are oriented substantially parallel to the tangent of the periphery of the brake disc 22. The brake lining has a first surface 139 which faces towards the brake disc 22. In the shown embodiment, two grooves 140 are formed in the first surface 139 of the brake lining 138. However, the brake lining 138 may also be provided with one groove only, or three, four or more grooves, depending on the size of the brake lining 138. The grooves 140 comprises a first end 141 which contacts the first side face 156 of the brake lining 138, and a second end 143 that contacts the second side face 158 of the brake lining 138.

The grooves are straight and oriented with a groove orientation angle φ₁ compared to a normal to the side faces (or equivalently to a radius to the brake disc 22). The groove orientation angle φ₁ may be between 5 and 45 degrees, advantageously between 10 and 30 degrees and more advantageously between 15 and 25 degrees. The groove orientation angle may also be defined from a second angle φ₂ compared to a tangent to the brake lining 138 (or equivalently to a tangent to the brake disc 22), where φ₂ = 90 - φ₁. These groove orientation angles have shown to be particularly suited for removing the dust and residues from the brake and prevent the build-up of glazing.

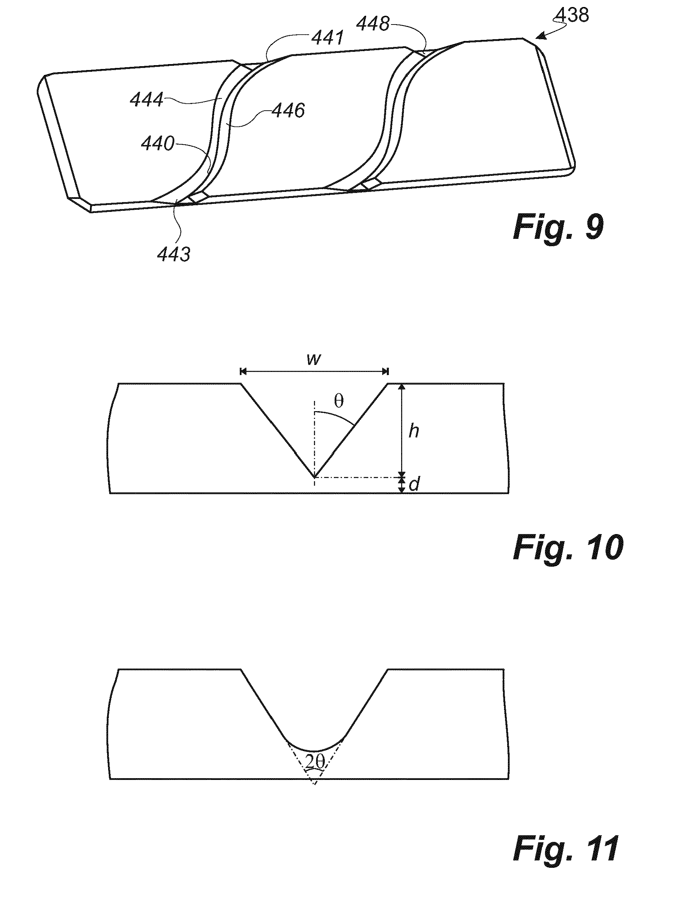

The grooves 140 comprise a first sidewall 144 and a second sidewall 146, and the first sidewall 144 and second sidewall 146 are in a cross-sectional view diverging so that the groove width is increasing towards the first surface 139 of the brake lining 138. The grooves 140 are advantageously v-shaped as shown in Fig. 10. The bottom of the grooves may also be rounded or substantially u-shaped as shown in Fig. 11. Grooves having a groove width that is increasing towards the first surface 139 of the brake lining 138 have surprisingly shown to be particularly suited for guiding the dust and residues to the periphery of the brake lining 138.

The groove width w at the top surface of the groove, i.e. the surface width *w,* may be between 7 and 25 mm, advantageously between 10 and 20 mm, more advantageously around 14 mm. The groove depth h may be between 3 and 15 mm, advantageously between 5 and 12 mm, more advantageously around 7 mm. Correspondingly, the first sidewall and/or the second sidewall may be angled with a sidewall angle θ being between 5 and 50 degrees, or between 15 and 50 degrees, or between 25 and 50 degrees to a normal to the first surface. The distance d between the bottom of the groove and a second surface (or bottom surface) of the brake lining may advantageously be approximately 2 mm.

Fig. 7 shows a second embodiment of a brake lining 238 according to the invention, in which like numerals refer to like parts of the first embodiment. The grooves 240 of the second embodiment differ from the grooves of the first embodiment in that the ends 241, 243 of the grooves 240 are chamfered. Thus, the cross-sectional area of the outlet opening of the groove is increased compared to the remainder of the groove, which assists in removing the wear particles even further.

Fig. 8 shows a third embodiment of a brake lining 338 according to the invention, in which like numerals refer to like parts of the first embodiment. In the third embodiment, the grooves 340 are oriented normal to the periphery of the brake lining 338 or equivalently parallel to the radius of the brake disc 22. Thus, the groove orientation angle φ₁ is 0 degrees. In the third embodiment, the first sidewall 344 and the second sidewall 346 are also diverging from a middle part of the grooves 340 towards the first ends 341 and the second ends 343 of the grooves 340. The groove may have a constant depth along the groove, in which case the angle of the sidewall changes along the length. The grooves may also have a varying depth, e.g. increasing towards the first end and/or the second end, in which case the angle of the sidewall may be constant. Overall, it is seen that the groove may take up various configurations, where a cross-sectional area of the groove increases towards the periphery of the brake lining. This may provide an increasingly easier passage to assist dust migration to the periphery of the brake lining. The surface width of the grooves at the middle part of the groove may be between 8 and 16 mm, e.g. between 10 and 14 mm, and the surface width at the first end and the second end may be between 12 and 20 mm, e.g. between 14 and 18 mm. It is of course also possible to let the grooves be oriented in an angle similar to those shown in the first and the second embodiments.

Fig. 9 shows a third embodiment of a brake lining 438 according to the invention, in which like numerals refer to like parts of the first embodiment. In the fourth embodiment, the grooves 440 are substantially s-shaped. In other words, the groove comprises a middle part, where the groove is oriented at a low angle compared to the normal of the first side and the second side of the brake pad (or equivalently nearly orthogonal to the braking direction), whereas the angle increases towards the first end 441 and the second end 443 of the groove 440. This configuration has the advantage that a major part of the grooves 440 is oriented substantially orthogonal to the braking direction so that it more easily collects the wear particles, whereas the larger angles at the ends 441, 443 of the grooves 440 facilitate an improved removal of the particles. The groove orientation angle φ₁ may at a centre part of the groove 440 e.g. be around 5 degrees, whereas the groove orientation angle φ₁ at the first end 441 and the second end may be around 10 to 60 degrees, e.g. around 45 degrees. The grooves 440 are in this embodiment depicted with chamfered 448 ends. However, the grooves may also be provided without a chamfer. The grooves 440 may also be widening towards the first end and the second end of the grooves similar to the third embodiment shown in Fig. 8.

As examples, the BSAB 120 and BSAB 90 active yaw brakes have a brake lining dimension of 420 x 128 mm and 218 x 108 mm, respectively. The brake lining of the BSAB 120 may be provided with two grooves having a mutual spacing of 140 mm. The brake lining of the BSAB 90 may be provided with one groove only.

**List of reference numerals**

| | |
|---|---|
| 2 | wind turbine |
| 4 | tower |
| 6 | nacelle |
| 8 | hub |
| 10 | blade |
| 14 | blade tip |
| 15 | rotor shaft |
| 16 | blade root |
| 20 | yaw brake system |
| 22, 122 | brake disc |
| 23 | teeth |
| 24 | brake calliper |
| 26 | brake pads |
| 28 | yaw drive / gear |
| 30 | bore for brake piston |
| 32 | chamber |
| 34 | brake actuator / piston |
| 36 | backing plate |
| 38, 138, 238, 338, 438 | brake lining |
| 39, 139 | first surface of brake lining |
| 40, 140, 240, 340, 440 | groove |
| 141, 241, 341, 441 | first end of groove |
| 42 | bore for mounting bolts |
| 143, 243, 343, 443 | second end of groove |
| 144, 244, 344, 444 | first sidewall |
| 146, 246, 346, 446 | second sidewall |
| 248, 448 | Chamfer |
| 152 | first end face of brake lining |
| 154 | second end face of brake lining |
| 156 | first side face of brake lining |
| 158 | second side face of brake lining |
| d | lining thickness |
| h | groove height |
| W | groove width |
| θ | sidewall angle |
| φ₁ | groove orientation angle |
| φ₂ | groove orientation angle compared to tangent of brake lining |

## Claims

1. A wind turbine (2) comprising:
- a number of wind turbine blades (10) extending substantially radially from a hub (8) on a main shaft (15) having a substantially horizontal axis, the wind turbine blades (10) together with the hub (8) forming a rotor, which can be put into rotation by wind,
- the main shaft (15) being rotatably mounted in a nacelle (6) that is mounted on top of a tower (4), wherein
- the nacelle (6) may be rotated around a vertical axis (18) in relation to the tower (4) so as to adjust the rotor in relation to a prevailing wind direction, and wherein the wind turbine (2) further comprises
- a yaw brake system (20) comprising a brake calliper (24) and a brake disc (22), the yaw brake system (20), when activated, acting as a rotation restriction of the nacelle (6) in relation to the tower (4), wherein
- the brake calliper (24) is provided with a brake pad having a brake lining and an actuator for moving the brake pad against the brake disc (22), wherein the brake lining (38) comprises a first surface (39) facing towards the brake disc (22), **characterised in that**
- a groove (40) having a groove width (w) is formed in the first surface (39) of the brake lining (38), the groove (40) comprising a first end (141) and a second end (143), where at least the first end (141) and preferably also the second end (143) contacts a periphery of the brake lining (38), and wherein the groove width (w) is widening towards the first surface (39) of the brake lining (38).

2. A wind turbine according to claim 1, wherein the groove comprises a substantially v-shaped cross section.

3. A wind turbine according to claim 1 or 2, wherein the grooves have a surface width of between 7 and 25 mm, advantageously between 10 and 20 mm, more advantageously around 14 mm.

4. A wind turbine according to any of the preceding claims, wherein the grooves have a depth of between 3 and 15 mm, advantageously between 5 and 12 mm, more advantageously around 7 mm.

5. A wind turbine according to any of the preceding claims, wherein the groove at the first end and/or the second end is oriented at an angle with a tangent to the periphery of the brake lining, said angle being between 45 and 85 degrees, advantageously between 60 and 80 degrees, and more advantageously between 65 and 75 degrees.

6. A wind turbine according to any of the preceding claims, wherein the groove width is increasing from a middle part of the groove and towards the first end and/or the second end.

7. A wind turbine according to claim 6, wherein a surface width of the grooves at the middle part of the groove is between 8 and 16 mm, e.g. between 10 and 14 mm, and a surface with at the first end and the second end is between 12 and 20 mm, e.g. between 14 and 18 mm.

8. A wind turbine according to any of the preceding claims, wherein the first end and/or the second end of the groove is chamfered.

9. A wind turbine according to any of the preceding claims, wherein the groove is substantially s-shaped or z-shaped.

10. A wind turbine according to any of the preceding claims, wherein the brake lining comprises one or two grooves only.

11. A wind turbine according to any of the preceding claims, wherein the brake lining comprises a plurality of grooves which are arranged with a mutual spacing of 10-15 cm.

12. A wind turbine according to any of the preceding claims, wherein the wind turbine further comprises a yaw system for actively rotating the nacelle relative to the tower.

13. A wind turbine according to any of the preceding claims, wherein the brake disc or ring is mounted on the tower, and wherein the brake calliper is mounted on a lower part of the nacelle.

14. A wind turbine according to any of the preceding claims, wherein the brake calliper takes up an inner part of the brake disc.

15. A yaw brake for a wind turbine having a brake disc, wherein the yaw brake comprises:
- a brake calliper, wherein
- the brake calliper (24) is provided with a brake pad having a brake lining and an actuator for moving the brake pad against the brake disc (22), wherein the brake lining comprises a first surface facing towards the brake disc (22), **characterised in that**
- a groove having a groove width is formed in the first surface of the brake lining, the groove comprising a first end, which ends at a first periphery of the brake lining, and a second end, which ends at a second periphery of the brake lining, and wherein the groove width is widening towards the first surface of the brake lining.
